# EUROPÄISCHE PATENTSCHRIFT

(11) **EP 3 514 505 B1**
(45) Veröffentlichungstag und Bekanntmachung des Hinweises auf die Patenterteilung: **28.05.2025**
(21) Anmeldenummer: 18203645.9
(22) Anmeldetag: 31.10.2018
(51) Int. Cl.: G01F 1/32, G01F 15/14

(54) **STRÖMUNGSMESSER**
FLOW METER
DÉBITMÈTRE

(30) Priorität: 22.01.2018 DE 102018101278
(43) Veröffentlichungstag der Anmeldung: 24.07.2019
(73) Patentinhaber: SIKA Dr.Siebert & Kühn GmbH & Co. KG., 34260 Kaufungen (DE)
(72) Erfinder: ZANDER, Stefan, 34125 Kassel (DE)
(74) Vertreter: Walther Bayer Faber Patentanwälte PartGmbB

(56) Entgegenhaltungen:
- DE-A1- 2 635 801
- DE-A1- 4 016 673
- DE-C2- 4 016 673
- JP-A- S5 173 466
- JP-U- S5 714 821
- US-A- 4 397 192
- US-A1- 2009 217 771

## Beschreibung

Die Erfindung betrifft einen Strömungsmesser zur Messung der Fließgeschwindigkeit eines Fluids, mit einem Messrohr, das einen mit dem Fluid durchströmbaren Messraum bildet und mit wenigstens einem Störkörper, der im Messraum angeordnet ist und wobei im Messraum stromabwärts des Störkörpers weiterhin ein Messkörper angeordnet ist, der aufgrund einer Wirbelbildung am Störkörper auslenkbar ist.

### STAND DER TECHNIK

Beispielsweise offenbart die DE 198 82 239 B3 einen Strömungsmesser zur Messung der Fließgeschwindigkeit eines Fluids, mit einem Messrohr, das einen mit dem Fluid durchströmbaren Messraum bildet und mit wenigstens einem Störkörper, der im Messraum angeordnet ist und wobei im Messraum stromabwärts des Störkörpers weiterhin ein Messkörper angeordnet ist, der aufgrund einer Wirbelbildung am Störkörper auslenkbar ist, wobei ein derartiger Störkörper mit der vorstehend beschriebenen Funktion auch als Obstruktion bezeichnet wird. Derartige Strömungsmesser basieren auf dem Prinzip der Wirbelbildung am Störkörper, die eine Ablösefrequenz aufweist, welche proportional zur Geschwindigkeit ansteigt. Die periodische Wirbelablösung am Störkörper kann mit dem Messkörper gemessen werden, beispielsweise durch die Applikation eines Piezoelementes. Dabei wird das Prinzip der Karmann'schen Wirbelstraße genutzt, um aus der Ablösefrequenz der entstehenden Wirbel die Durchflussgeschwindigkeit des Fluids als primäre Messgröße zu bestimmen. Die Ausbildung der Wirbelstraße sowie die Stärke der Wirbel hängen im Allgemeinen von der Reynoldszahl und somit auch von der Strömungsgeschwindigkeit ab. Hin zu niedrigen Strömungsgeschwindigkeiten wird die Ausprägung der Wirbel dabei zunehmend schwächer, sodass das über die Piezoelemente erzeugbare Spannungssignal ebenfalls schwächer wird. Die Auswertung sehr schwacher Spannungssignale wird infolge geringer Strömungsgeschwindigkeiten damit deutlich erschwert. Das Dokument US 2009/217771 A1 offenbart einen Strömungsmesser.

Bekannte Möglichkeiten, Spannungssignale zu verstärken bestehen darin, die Sensitivität des Messkörpers zu verstärken. Eine geeignete Konstruktion und eine entsprechende Materialauswahl kann die Übertragung eines Biegemomentes beispielsweise auf die Piezokeramik verbessern, sodass die erzeugbaren Spannungen im Piezoelement erhöht werden. Ebenfalls bekannt sind elektronische Verstärkungen von Druckaufnehmern, wobei jedoch nachteilhafterweise auch Störsignale mit verstärkt werden.

### OFFENBARUNG DER ERFINDUNG

Aufgabe der Erfindung ist die weitere Verbesserung eines Strömungsmessers zur Messung der Fließgeschwindigkeit eines Fluids, der geeignet ist, auch geringe Strömungsgeschwindigkeiten mit einfachen Mitteln zu messen, indem gut auswertbare Messsignale auch bei niedrigen Strömungsgeschwindigkeiten bereitgestellt werden.

Diese Aufgabe wird ausgehend von einem Strömungsmesser gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass stromaufwärts des Störkörpers an einer den Messraum begrenzenden Innenwand wenigstens ein in den Messraum hineinragender Vorsprung ausgebildet ist.

Kern der Erfindung ist dabei eine Wirbelverstärkung, die auch bei niedrigen Strömungsgeschwindigkeiten des Fluids im Messrohr genutzt werden kann. Als Ursache für diesen Effekt kann angenommen werden, dass die Anordnung wenigstens eines Vorsprunges stromaufwärts des Störkörpers Turbulenzen am Vorsprung erzeugt, und die am Vorsprung erzeugten Turbulenzen lösen sich vom Vorsprung ab und können die am Störkörper erzeugten Wirbel einer sich ausbildenden Karmann'schen Wirbelstraße verstärken. Im Ergebnis ergibt sich eine stärkere Beaufschlagung des Messkörpers durch die periodisch sich am Störkörper ablösenden verstärkten Wirbel.

Mit besonderem Vorteil erstreckt sich der Störkörper quer zu einer Längsachse des Messraumes beispielsweise in einer Hochachse durch diesen hindurch, wobei der wenigstens eine Vorsprung in einer mit Bezug auf die Hochachse um die Längsachse gedrehten Position an der Innenwand angeordnet ist. Die Verdrehung kann beispielsweise 60° bis 90°, bevorzugt 80° bis 90° und besonders bevorzugt 90° betragen, sodass der Vorsprung besonders bevorzugt unmittelbar quer zur Hochachse angeordnet ist.

Ein besonders guter Verstärkungseffekt ergibt sich dann, wenn an der Innenwand in sich gegenüberliegende Positionen zwei Vorsprünge angeordnet sind. Erstreckt sich über den kreisrunden Querschnitt des Messraumes hindurch der Störkörper in der Vertikalen, so befinden sich die Vorsprünge in lateraler Anordnung seitlich im Messrohr. Dabei sind die Vorsprünge vorzugsweise diametral gegenüberliegend angeordnet, und durch die Bildung der Vorwirbel an den Vorsprüngen wird die periodische Wirbelbildung am Störkörper in beiden lateralen Richtungen durch größere sich bildende Wirbel gleichermaßen verstärkt.

Ein wesentlicher Vorteil, eine Wirbelverstärkung mittels der Vorsprünge an der Innenwand des Messrohres zu erzeugen, besteht darin, dass die Vorsprünge klein ausfallen können und nur einen geringen zusätzlichen Strömungswiderstand erzeugen, insbesondere auch deshalb, da die Strömungsgeschwindigkeit des Fluids in der Nähe der Innenwand des Messraumes ohnehin bereits deutlich geringer ist als beispielsweise in der Mitte des Messraumes. Damit erfolgt die Anströmung der Vorsprünge durch das Fluid mit Geschwindigkeiten, die deutlich geringer sind als eine nominelle Strömungsgeschwindigkeit des Fluids.

Der Messraum weist in der Regel eine zylinderförmige Grundform auf, die sich etwa rotationssymmetrisch um die Längsachse erstreckt, insbesondere wobei der oder die Vorsprünge eine Strömungskante aufweisen, die sich parallel zur Hochachse und damit parallel zur länglichen Erstreckungsrichtung des Störkörpers erstrecken. Werden die Vorsprünge vom Fluid angeströmt, so bilden sich auf der Hinterseite der Strömungskanten Totwasserbereiche, die zu einer Turbulenzbildung im Fluid führen, wobei die gebildeten Turbulenzen die Wirbel am Störkörper deutlich verstärken können. Diese Verstärkung bewirkt eine stärkere Beeinflussung des Messkörpers, woraus sich eine größere Signalstärke des Messsignals ergibt.

Beispielsweise ist die Strömungskante zwischen zwei Flächen des Vorsprunges so gebildet, dass eine Scharfkantigkeit erzeugt wird, beispielsweise indem die Strömungskante durch zwei Flächen gebildet wird, die zueinander rechtwinklig oder in einem noch spitzeren Winkel angeordnet sind. Die Vorderseite des Vorsprungs kann dabei eine schräg angeordnete Planfläche bilden, oder diese weist eine Krümmung auf, die schließlich in der Strömungskante mündet. Auf der Rückseite des Vorsprunges, also der Begrenzungsseite des Totwasserbereiches, weisen die Vorsprünge vorzugsweise eine Planfläche auf.

Die Länge der Strömungskante kann beispielsweise 15% bis 80%, vorzugsweise 25% bis 50% und besonders bevorzugt 35% des Durchmessers des Messraumes betragen, welcher einen insbesondere kreiszylindrischen Querschnitt aufweist. Beispielsweise kann der Durchmesser der zylinderförmigen Grundform des Messraumes einen Wert von 8 mm bis 30 mm, vorzugsweise von 10 mm bis 20 mm, besonders bevorzugt von 12 mm bis 14 mm, und am meisten bevorzugt von 13 mm aufweisen, wobei die Länge der Strömungskante einen Wert von 2 mm bis 10 mm, vorzugsweise von 3 mm bis 6 mm und besonders bevorzugt von 4,5 mm aufweist. Die 4,5 mm korrespondieren dabei mit den 13 mm des Durchmessers des Messraumes, sodass ein größerer oder kleinerer Messraum auch zu einer entsprechend größeren oder kleineren Strömungskante führen kann, die vorzugsweise entsprechend ausgebildet werden kann. Gemäß einem möglichen Ausführungsbeispiel kann die Höhe des Vorsprungs in einer radial auf die Längsachse zulaufenden Richtung beginnend von der Innenwand des Messraumes beispielsweise 2% bis 30%, bevorzugt 10% bis 20% und besonders bevorzugt 13% bis 17% vom Durchmesser des Messraumes betragen. Beispielsweise kann damit ein Wert der Höhe des Vorsprunges von 1 mm bis 3 mm, vorzugsweise von 1,5 mm bis 2,5 mm und besonders bevorzugt von 2 mm betragen, wenn der Durchmesser des Messraumes 15mm beträgt.

Die Strömungskante bildet dabei den äußeren Abschluss des Vorsprunges, mit der dieser in den Innenraum hineinragt, sodass beginnend von der Innenwand die Strömungskante den oberen Abschuss des Vorsprungs bildet.

Zur Erzeugung des Vorsprungs kann vorgesehen sein, dass dieser einteilig und/oder materialeinheitlich mit dem Messrohr ausgebildet ist. Auch besteht die Möglichkeit, ein separates Blendenelement vorzusehen, das stromaufwärts vor dem Messrohr angeordnet ist und wobei das Blendenelement einen mit dem Durchmesser des Messraumes korrespondieren Durchgang aufweist und wobei an dem Blendenelement der wenigstens eine Vorsprung ausgebildet ist. Beispielsweise kann das Blendenelement bei der Einbindung des Messrohres in eine Fluidleitung vor das Messrohr gesetzt werden.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Ansicht eines Strömungsmessers mit einem Messrohr, in dem ein Messraum ausgebildet ist, und stromaufwärts eines Störkörpers befinden sich an der Innenwand des Messraumes zwei sich gegenüberliegende Vorsprünge,
- Fig. 2: eine Draufsicht auf den Strömungsmesser aus Richtung der Längsachse,
- Fig. 3: eine perspektivische Ansicht eines Blendenelementes, an dem zwei Vorsprünge ausgebildet sind,
- Fig. 4: ein erstes mögliches Ausführungsbeispiel zur Ausgestaltung eines Vorsprunges,
- Fig. 5: ein zweites mögliches Ausführungsbeispiel zur Ausgestaltung eines Vorsprunges und
- Fig. 6: ein weiteres mögliches Ausführungsbeispiel zur Ausgestaltung eines Vorsprunges.

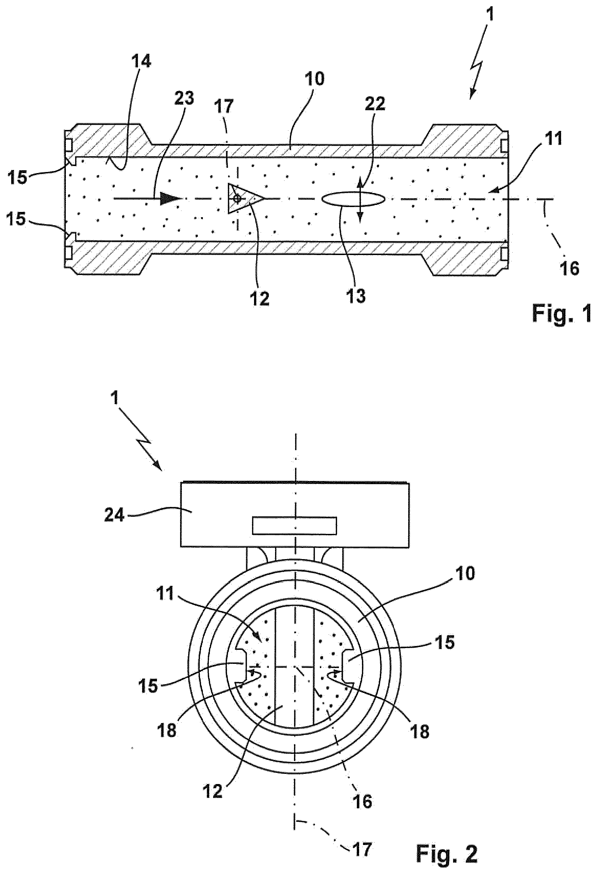

Fig. 1 zeigt in einer quergeschnittenen Seitenansicht einen Strömungsmesser 1 mit einem Messrohr 10 zur Messung der Fließgeschwindigkeit eines Fluids, das durch das Messrohr 10 in einer Strömungsrichtung 23 hindurchströmen kann. Hierzu weist das Messrohr 10 einen Messraum 11 auf, der sich entlang einer Längsachse 16 erstreckt und beispielsweise einen kreisrunden Strömungsquerschnitt aufweist, Innerhalb des Messraums 11 ist ein Störkörper 12 angeordnet, der sich entlang einer Hochachse 17 erstreckt, wobei die Hochachse 17 über der Diametralen des Messraumes 11 ausgebildet ist, und damit erstreckt sich die Hochachse 17 quer zu Längsachse 16 und steht damit senkrecht auf der Bildebene.

Die Durchströmung des Messraumes 11 erfolgt in der mit einem Pfeil angedeuteten Strömungsrichtung 23, und stromabwärts des Störkörpers 12 befindet sich ein Messkörper 13. Durch die Anströmung des Störkörpers 12 werden an diesem sich periodisch ablösende Wirbel gebildet, die zu einer Auslenkung des Messkörpers 13 in einer Auslenkungsrichtung 22 führen. Die Auslenkung des Messkörpers 13 erfolgt dabei ebenfalls periodisch, wodurch ein Messsignal abgeleitet werden kann, insbesondere indem in Verbindung mit dem Messkörper 13 Piezoelemente appliziert werden. Der Messkörper 13 muss sich dabei nicht über den gesamten Durchmesser des Messraumes 11 hinweg erstrecken und es kann hinreichend sein, wenn der Messkörper 13 sich lediglich finnenartig in den Messraum 11 hinein erstreckt.

Stromaufwärts vor dem Störkörper 12 befinden sich an der Innenwand 14 des Messraumes 11 in seitlicher Anordnung zum Störkörper 12 zwei Vorsprünge 15. Die Vorsprünge 15 sind in einer sich gegenüberliegenden Anordnung an der Innenwand 14 angeordnet, wobei die diametrale Richtung der Anordnung der Vorsprünge 15 gemäß dem gezeigten Ausführungsbeispiel 90° gedreht ist zur Hochachse 17, entlang der sich der Störkörper 12 erstreckt.

Erfolgt eine Durchströmung des Messraumes 11, so werden an oder unmittelbar hinter den Vorsprüngen 15 Turbulenzen gebildet, die die Wirbel am Strömungskörper 12 beeinflussen und/oder die sich mit den Wirbeln am Strömungskörper 12 beispielsweise vereinen können und diese damit vergrößern. Dadurch ergibt sich eine Verstärkung der Wirbelbildung am Störkörper 12, sodass auch die Auslenkung des Messkörpers 13 in der mit Pfeilen gezeigten Auslenkungsrichtung 22 verstärkt erfolgen kann. Dadurch lässt sich ein stärkeres Messsignal erzeugen, sodass auch Strömungen mit sehr niedrigen Strömungsgeschwindigkeiten des Fluids durch das Messrohr 10 verbessert messbar sind.

Fig. 2 zeigt eine Ansicht des Strömungsmessers 1 aus Blickrichtung der Längsachse 16, und die Hochachse 17 erstreckt sich in der Vertikalen, entlang der sich auch der Störkörper 12 erstreckt. Seitlich zum Störkörper 12 befinden sich die Vorsprünge 15, die vorderseitig eine Strömungskante 18 aufweisen. Die Strömungskante 18 erstreckt sich dabei zumindest abschnittsweise parallel zur Hochachse 17 und damit auch parallel zum Störkörper 12. Oberhalb des Messrohres 10 befindet sich eine Messanschlusseinheit 24, und wird der Messraum 11 mit einem Fluid durchströmt, so erfolgt eine Auslenkung des verdeckten Messkörpers, die mit einem entsprechenden Messelement gemessen werden kann, und eine Auswertung und eine entsprechende Anschlussmöglichkeit kann über die Messanschlusseinheit 24 vorgenommen werden, beispielsweise zu einer peripheren Auswerteeinheit.

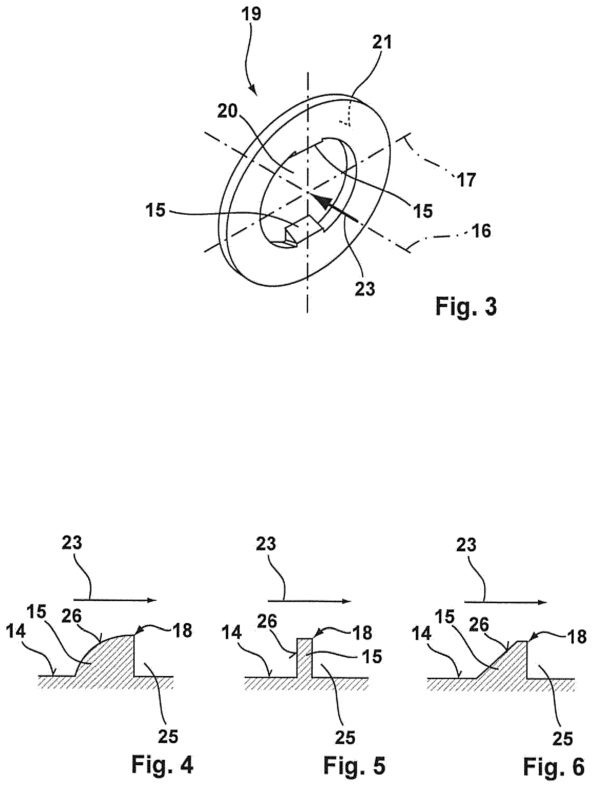

Fig. 3 zeigt eine perspektivische Ansicht eines Blendenelementes 19, an dem die Vorsprünge 15 ausgebildet sind. Das Blendenelement 19 weist einen Durchgang 20 auf, sodass dieses in Richtung der Längsachse 16 durchströmt werden kann. Ein solches Blendenelement 19 kann mit einer Planfläche 21 an der Mündung bzw. der Stirnfläche eines Messrohres 10 gemäß Fig. 1 angeordnet werden. Die Ausrichtung der Hochachse 17 ist in der Ansicht ebenfalls dargestellt, sodass ein weiteres Mal verdeutlich ist, dass sich die Vorsprünge 15 in ihrer Anordnung quer zur Hochachse 17 befinden. Der Durchmesser des Durchgangs 20 kann zudem dem Durchmesser des Messraums 11 entsprechen.

Fig. 4 zeigt ein mögliches erstes Ausführungsbeispiel zur Bildung eines Vorsprunges 15 mit einer Strömungskante 18. In Strömungsrichtung 23 weist der Vorsprung 15 vorderseitig eine gekrümmte Anströmfläche 26 auf, die in die Strömungskante 18 mündet, und hinter der Strömungskante 18 wird ein Totwasserbereich 25 gebildet, in welchem sich die gewünschten Wirbel bilden. Die Darstellung des Vorsprunges 15 befindet sich dabei in Anordnung an der Innenwand 14 des Messrohres.

Fig. 5 zeigt eine weitere Ausführungsform eines Vorsprunges 15 in Anordnung an der Innenwand 14 mit einer Strömungskante 18, wobei der Vorsprung 15 sowohl in als auch entgegen der Strömungsrichtung 23 Planflächen aufweist, sodass auch die Anströmfläche 26 plan ausgebildet ist und der Totwasserbereich 25 wird ebenfalls von einer Planfläche begrenzt.

Fig. 6 zeigt schließlich eine Ausgestaltung eines Vorsprungs 15 in Anordnung an der Innenwand 14 mit einer entgegen der Strömungsrichtung 23 ausgebildeten rampenförmigen Anströmfläche 26, die schließlich auch vorderseitig in die Strömungskante 18 mündet, wobei wiederum der Totwasserbereich 25 vor einer Planfläche des Vorsprunges 15 begrenzt ist.

Die dargestellten Innenwände 14 können auch durch den Innenrand des Durchganges 20 des Blendenelementes 19 gemäß Figur 3 gebildet sein.

Mit den dargestellten nicht abschließend aufgeführten Ausgestaltungen von Vorsprüngen 15 werden jeweils Totwasserbereiche 25 gebildet, in denen Turbulenzen entstehen, die ab einer gewissen Strömungsgeschwindigkeit von den Vorsprüngen 15 abgelöst werden können und die Turbulenzen werden durch die Strömungsbewegung des Fluids zum Störkörper 12 geführt. Die sich damit ergebene Verstärkung der Hauptwirbel, die am Störkörper 12 entstehen und den Messkörper 13 beaufschlagen, führt zu einer verbesserten Messbarkeit der Wirbelfrequenz am Messkörper 13.

Die Erfindung beschränkt sich ihrer Ausführung nicht auf das vorstehend angegebene bevorzugte Ausführungsbeispiel. Die vorliegende Erfindung wird durch die beigefügten Ansprüche 1 bis 10 definiert.

### Bezugszeichenliste:

- 1: Strömungsmesser

- 10: Messrohr
- 11: Messraum
- 12: Störkörper
- 13: Messkörper
- 14: Innenwand
- 15: Vorsprung
- 16: Längsachse
- 17: Hochachse
- 18: Strömungskante
- 19: Blendenelement
- 20: Durchgang
- 21: Planfläche
- 22: Auslenkungsrichtung
- 23: Strömungsrichtung
- 24: Messanschlusseinheit
- 25: Totwasserbereich
- 26: Anströmfläche

## Patentansprüche

1. Strömungsmesser (1) zur Messung der Fließgeschwindigkeit eines Fluids, mit einem Messrohr (10), das einen mit dem Fluid durchströmbaren Messraum (11) bildet und mit wenigstens einem Störkörper (12), der im Messraum (11) angeordnet ist und wobei im Messraum (11) stromabwärts des Störkörpers (12) weiterhin ein Messkörper (13) angeordnet ist, der aufgrund einer Wirbelbildung am Störkörper (12) auslenkbar ist,
**dadurch gekennzeichnet,**
**dass** stromaufwärts des Störkörpers (12) an einer den Messraum (11) begrenzenden Innenwand (14) des Messrohrs (10) wenigstens ein in den Messraum (11) hineinragender Vorsprung (15) so ausgebildet ist, dass am Vorsprung (15) erzeugbare Turbulenzen sich vom Vorsprung (15) ablösen und am Störkörper (12) erzeugbare Wirbel einer sich ausbildenden Karmann'schen Wirbelstraße verstärken.

2. Strömungsmesser (1) nach Anspruch 1,
**dadurch gekennzeichnet,**
**dass** sich der Störkörper (12) quer zu einer Längsachse (16) des Messraumes (11) in einer Hochachse (17) durch diesen hindurch erstreckt und/oder wobei der wenigstens eine Vorsprung (15) in einer mit Bezug auf die Hochachse (17) um die Längsachse (16) um 60° bis 90° und/oder um 80° bis 90° und/oder um genau 90° gedrehten Position an der Innenwand (14) des Messrohrs (10) angeordnet ist.

3. Strömungsmesser (1) nach Anspruch 1 oder 2,
**dadurch gekennzeichnet,**
**dass** an der Innenwand (14) des Messrohrs (10) in sich gegenüberliegenden Positionen zwei Vorsprünge (15) angeordnet sind.

4. Strömungsmesser (1) nach einem der Ansprüche 1 bis 3,
**dadurch gekennzeichnet,**
**dass** der Messraum (11) eine zylinderförmige Grundform aufweist, die sich um die Längsachse (16) herum erstreckt und/oder wobei der oder die Vorsprünge (15) eine Strömungskante (18) aufweisen, die sich parallel zur Hochachse (17) und/oder parallel zur länglichen Erstreckungsrichtung des Störkörpers (12) erstreckt.

5. Strömungsmesser (1) nach Anspruch 4,
**dadurch gekennzeichnet,**
**dass** die Strömungskante (18) zwischen zwei Flächen des Vorsprunges (15) gebildet ist, die zumindest angrenzend an die Strömungskante (18) rechtwinklig zueinander angeordnet sind.

6. Strömungsmesser (1) nach einem der vorgenannten Ansprüche, **dadurch gekennzeichnet,**
**dass** die Länge der Strömungskante (18) 15% bis 80% und/oder 25% bis 50% und/oder 35% des Durchmessers des zylinderförmigen Messraumes (11) beträgt.

7. Strömungsmesser (1) nach einem der vorgenannten Ansprüche, **dadurch gekennzeichnet,**
**dass** die Höhe des Vorsprungs (15) in einer radial auf die Längsachse (16) zulaufenden Richtung beginnend von der Innenwand des Messraumes beispielsweise 2% bis 30%, bevorzugt 10% bis 20% und besonders bevorzugt 13% bis 17% des Durchmessers des Messraumes beträgt.

8. Strömungsmesser (1) nach einem der Ansprüche 4 bis 7,
**dadurch gekennzeichnet,**
**dass** die Strömungskante (18) einen über der Innenwand (14) des Messrohrs (10) oberen Abschluss des Vorsprunges (15) bildet.

9. Strömungsmesser (1) nach einem der vorgenannten Ansprüche, **dadurch gekennzeichnet,**
**dass** der wenigstens eine Vorsprung (15) einteilig und/oder materialeinheitlich mit dem Messrohr (10) ausgebildet ist.

10. Strömungsmesser (1) nach einem der Ansprüche 1 bis 8,
**dadurch gekennzeichnet,**
**dass** ein Blendenelement (19) vorgesehen ist, das stromaufwärts vor dem Messrohr (10) angeordnet ist und wobei das Blendenelement (19) einen mit dem Durchmesser des Messraumes (11) korrespondierenden Durchgang (20) aufweist, und wobei an dem Blendenelement (19) der wenigstens eine Vorsprung (15) ausgebildet ist.

## Claims

1. A flowmeter (1) for measuring the flow rate of a fluid having a measurement tube (10) that forms a measurement space (11) through which the fluid can flow and having at least one bluff body (12) that is arranged in the measurement space (11) and wherein a measurement sensor (13) that is deflectable due to a vortex formation at the bluff body (12) is furthermore arranged downstream of the bluff body (12) in the measurement space (11), **characterized in that**
at least one projection (15) that projects into the measurement space (11) downstream of the bluff body (12) at an inner wall (14) of the measurement pipe (10) bounding the measurement space (11) is configured such that turbulence that can be generated at the projection (15) are shed from the projection (15) and amplify turbulence that can be generated at the bluff body (12) of a forming Kármán vortex street.

2. A flow meter (1) in accordance with claim 1,
**characterized in that**
the bluff body (12) extends transversely to a longitudinal axis (16) of the measurement space (11) in a vertical axis therethrough, and/or with the at least one projection (15) being arranged in a position at the inner wall (14) of the measurement pipe (10) rotated about the longitudinal axis (16) by 60° to 90°, and/or by 80° to 90°, and/or by exactly 90° with respect to the vertical axis (17).

3. A flowmeter (1) in accordance with claim 1 or claim 2,
**characterized in that**
two projections (15) are arranged at oppositely disposed positions at the inner wall (14) of the measurement pipe (10).

4. A flow meter (1) in accordance with one of the claims 1 to 3,
**characterized in that**
the measurement space (11) has a cylindrical basic shape that extends about the longitudinal axis (16) and/or with the projection or projections (15) having a flow edge (18) that extends in parallel with the vertical axis (17) and/or in parallel with the longitudinal direction of extent of the bluff body (12).

5. A flow meter (1) in accordance with claim 4,
**characterized in that**
the flow edge (18) is formed between two surfaces of the projection (15) that are arranged at right angles to one another at least adjacent to the flow edge (18).

6. A flow meter (1) in accordance with one of the preceding claims,
**characterized in that**
the length of the flow edge (18) amounts to 15% to 80% and/or 25% to 50%, and/or 35% of the diameter of the cylindrical measurement space (11).

7. A flow meter (1) in accordance with one of the preceding claims,
**characterized in that**
the height of the projection (15) in a direction tapering radially to the longitudinal axis (16), starting from the inner wall of the measurement space, amounts, for example, to 2% to 30%, preferably 10% to 20%, and particularly preferably 13% to 17%, of the diameter of the measurement space.

8. A flow meter (1) in accordance with one of the claims 4 to 7,
**characterized in that**
the flow edge (18) forms an upper termination of the projection (15) above the inner wall (14) of the measurement tube (10).

9. A flow meter (1) in accordance with one of the preceding claims,
**characterized in that**
the at least one projection (15) is formed in one part and/or with material unity with the measurement pipe (10).

10. A flow meter (1) in accordance with one of the claims 1 to 8,
**characterized in that**
an orifice plate element (19) is provided that is arranged upstream in front of the measurement tube (20) and with the orifice plate element (19) having a passage (20) corresponding to the diameter of the measurement space (11) and with the at least one projection (15) being formed at the orifice plate element (19).

## Revendications

1. Débitmètre (1) destiné à mesurer la vitesse d'écoulement d'un fluide, comportant un tube de mesure (10) qui forme un espace de mesure (11) pouvant être traversé par le fluide et comportant au moins un obstacle (12) qui est disposé dans l'espace de mesure (11), et dans lequel, dans l'espace de mesure (11) en aval de l'obstacle (12), est en outre disposé un corps de mesure (13) qui peut être dévié en raison de la formation de tourbillons sur l'obstacle (12),
**caractérisé en ce que**
en amont de l'obstacle (12), au moins une saillie (15) dépassant dans l'espace de mesure (11) est formée sur une paroi intérieure (14) du tube de mesure (10) qui limite l'espace de mesure (11) de telle sorte que des turbulences pouvant être générées sur la saillie (15) se détachent de la saillie (15) et des tourbillons pouvant être générés sur l'obstacle (12) renforcent une allée de tourbillons de Karmann qui se forme.

2. Débitmètre (1) selon la revendication 1,
**caractérisé en ce que**
l'obstacle (12) s'étend transversalement à un axe longitudinal (16) de l'espace de mesure (11) suivant un axe vertical (17) à travers celui-ci et/ou dans lequel l'au moins une saillie (15) est disposée sur la paroi intérieure (14) du tube de mesure (10) dans une position tournée de 60° à 90° et/ou de 80° à 90° et/ou de 90° exactement autour de l'axe longitudinal (16) par rapport à l'axe vertical (17).

3. Débitmètre (1) selon la revendication 1 ou 2,
**caractérisé en ce que**
deux saillies (15) sont disposées dans des positions opposées sur la paroi intérieure (14) du tube de mesure (10).

4. Débitmètre (1) selon l'une des revendications 1 à 3,
**caractérisé en ce que**
l'espace de mesure (11) présente une forme de base cylindrique qui s'étend autour de l'axe longitudinal (16) et/ou dans lequel la ou les saillies (15) présentent une arête d'écoulement (18) qui s'étend parallèlement à l'axe vertical (17) et/ou parallèlement au sens de la longueur de l'obstacle (12).

5. Débitmètre (1) selon la revendication 4,
**caractérisé en ce que**
l'arête d'écoulement (18) est formée entre deux surfaces de la saillies (15) qui sont disposées perpendiculairement l'une à l'autre au moins là où elles sont adjacentes à l'arête d'écoulement (18).

6. Débitmètre (1) selon l'une des revendications précédentes,
**caractérisé en ce que**
la longueur de l'arête d'écoulement (18) est égale à 15 % à 80 % et/ou à 25 % à 50 % et/ou à 35 % du diamètre de l'espace de mesure (11) cylindrique.

7. Débitmètre (1) selon l'une des revendications précédentes,
**caractérisé en ce que**
la hauteur de la saillie (15) dans une direction allant radialement vers l'axe longitudinal (16) à partir de la paroi intérieure de l'espace de mesure est égale à, par exemple, 2 % à 30 %, de préférence 10 % à 20 % et de manière particulièrement préférée 13 % à 17 % du diamètre de l'espace de mesure.

8. Débitmètre (1) selon l'une des revendications 4 à 7,
**caractérisé en ce que**
l'arête d'écoulement (18) forme une limite supérieure de la saillie (15) au-dessus de la paroi intérieure (14) du tube de mesure (10).

9. Débitmètre (1) selon l'une des revendications précédentes,
**caractérisé en ce que**
l'au moins une saillie (15) est réalisée d'un seul tenant avec le tube de mesure (10) et/ou dans le même matériau que celui-ci.

10. Débitmètre (1) selon l'une des revendications 1 à 8,
**caractérisé en ce que**
un élément formant diaphragme (19) est prévu disposé en amont du tube de mesure (10) et dans lequel l'élément formant diaphragme (19) présente un passage (20) correspondant au diamètre de l'espace de mesure (11) et dans lequel l'au moins une saillie (15) est formée sur l'élément formant diaphragme (19).
